# EUROPÄISCHE PATENTSCHRIFT

(11) **EP 1 101 119 B1**
(45) Veröffentlichungstag und Bekanntmachung des Hinweises auf die Patenterteilung: **24.03.2004**
(21) Anmeldenummer: 99940167.2
(22) Anmeldetag: 06.08.1999
(51) Int. Cl.: G01N 35/10, B01L 3/02

(54) **DOSIERKOPF ZUR PARALLELEN BEARBEITUNG EINER VIELZAHL VON FLUIDPROBEN**
DOSING HEAD FOR PARALLEL TREATMENT OF A PLURALITY OF FLUID PROBES
TETE DE DOSAGE PERMETTANT DE TRAITER EN PARALLELE UNE PLURALITE DE SONDES FLUIDIQUES

(30) Priorität: 07.08.1998 DE 19835833
(43) Veröffentlichungstag der Anmeldung: 23.05.2001
(73) Patentinhaber: RZPD Deutsches Ressourcenzentrum für Genomforschung GmbH, 14059 Berlin (DE)
(72) Erfinder: BIENERT, Klaus, D-14471 Potsdam (DE); KRAACK, Heiko, D-14469 Potsdam (DE); VENTE, Andreas, D-10707 Berlin (DE); ZETTL, Rolf, D-10439 Berlin (DE)
(74) Vertreter: Hertz, Oliver, Dr.
(86) Internationale Anmeldenummer: PCT/EP1999/005715
(87) Internationale Veröffentlichungsnummer: WO 2000/008474

(56) Entgegenhaltungen:
- EP-A- 0 514 948
- WO-A-86/02168
- DE-A- 19 754 000
- DE-C- 19 628 178
- US-A- 5 055 263
- US-A- 5 497 670
- US-A- 5 645 723
- US-A- 5 660 792
- US-A- 5 736 105

## Beschreibung

Die Erfindung betrifft einen Dosierkopf zur Aufnahme, Bewegung und Abgabe von Fluidproben, insbesondere einen Dosierkopf mit einer Vielzahl von Dosiereinrichtungen, der mit einer Picking-/Spotting-Anlage manipulierbar ist. Die Erfindung betrifft auch Verfahren zur Verwendung eines solchen Dosierkopfes.

In der Biochemie, molekularen Genetik und Medizin besteht ein Interesse an der Manipulierung gelöster oder suspendierter Substanzen für Nachweis-, Analyse-, Reaktions- oder Synthesezwecke. Häufig muß eine große Anzahl von Proben mit jeweils kleinen Probenvolumen verarbeitet werden. Für diesen Zweck wurden sogenannte Picking-/Spotting-Anlagen entwickelt, mit denen Proben von einem Ort auf einem Trägersubstrat (z.B. auf einer Mikrotiterplatte) zu einem anderen Ort auf diesem oder einem anderen Trägersubstrat übertragen werden.

Aus der Praxis sind Picking-/Spotting-Anlagen allgemein bekannt, die zur Probenmanipulierung einen Roboterkopf mit matrixartig angeordneten Picking-Nadeln aufweisen. Zur Probenmanipulierung wird der Roboterkopf über eine Mikrotiterplatte gefahren. Die Picking-Nadeln werden einzeln in Folge in die gewünschten Mikrotiter-Volumen getaucht, wobei die Probenaufnahme durch Anhaftung der Flüssigkeit an der Nadelspitze erfolgt.

Die herkömmlichen Picking-/Spotting-Anlagen mit Roboterköpfen auf der Basis von Picking-Nadeln besitzen die folgenden Nachteile. Um die Roboterköpfe mit praktisch interessierenden Zahlen von z.B. 96 Picking-Nadeln möglichst schnell und behinderungsfrei bewegen zu können, besteht bisher das Bemühen, die Zahl der Versorgungsleitungen von der ortsfesten Anlage zum bewegten Roboterkopf möglichst klein zu halten. Dies wird beispielsweise durch Matrixschaltungen erreicht, bei der zu jeder Nadelreihe und zu jeder Nadelspalte der Matrixanordnung je eine Versorgungsleitung geführt wird, so daß eine Nadelbetätigung erfolgen kann, wenn die zu einer bestimmten Nadel gehörigen Reihen und Spalten angesteuert werden. Dies bedeutet zwar eine erhebliche Reduzierung der Leitungszahl, hat aber auch zur Folge, daß bisher die Roboterköpfe lediglich sequentiell, d.h. Nadel für Nadel in Folge, betrieben werden können. Dies ist nachteilig für die Gesamtdauer der beispielsweise an einer Mikrotiterplatte beabsichtigten Arbeitsschritte. Dies ist nicht nur in Bezug auf die zu bearbeitenden großen Probenzahlen problematisch, sondern auch einschränkend, falls nur eine bestimmte Reaktionszeit zur Bearbeitung zur Verfügung steht.

Alternativ zu der genannten Matrixansteuerung sind Roboterköpfe bekannt, bei denen für eine Vielzahl von Nadeln eine gemeinsame Betätigungseinrichtung vorgesehen ist, die auf der Rückseite der Matrixanordnung verfahrbar ist. Es ist beispielsweise ein Dosierkopf allgemein bekannt, bei dem eine Betätigungseinrichtung (z.B. in Form eines Pneumatikzylinders) mit einer Kreuztisch-Verstellung zu der Position einer Nadel gefahren wird, die betätigt werden soll. Auch bei dieser Technik ist lediglich eine sequentielle Nadelbetätigung möglich, indem die einzige Betätigungseinrichtung sequentiell die jeweils zu betätigenden Nadeln abfährt. Damit sind bei diesem Aufbau die gleichen Probleme wie bei der oben erläuterten Matrixansteuerung gegeben.

Wenn das obengenannte Bemühen um Minimierung der Zahl der Versorgungsleitungen nicht im Vordergrund steht, so können bekannterweise an Dosierköpfen auch mehrere Dosiereinrichtungen mit getrennten Versorgungsleitungen angebracht sein. Ein solcher Dosierkopf ist beispielsweise in US-A-5 055 263 beschrieben. Bei Dosierköpfen dieses Typs sind die Dosiereinrichtungen jedoch in der Regel mit einem Schrittmotorantrieb ausgestattet. Dies stellt eine Beschränkung hinsichtlich der Anordnungsdichte der Dosiereinrichtungen dar. Schrittmotorgetriebene Dosiereinrichtungen können nicht matrixartig entsprechend dem Raster üblicherweise verwendeter Mikrotiterplatten angeordnet werden. Damit ergeben sich Probleme bei der Bearbeitung von Proben aus Mikrotiterplatten. Ein weiterer Nachteil der Dosierköpfe mit einzeln ansteuerbaren Dosiereinrichtungen besteht darin, daß zur Bereitstellung eines möglichst leichten Dosierkopfes dieser integral aufgebaut wird. Die Dosiereinrichtungen sind fest mit einer Ansteuereinheit verbunden und können nicht für spezielle Anwendungen (Anpassung an die Probenvolumina, Probenform etc.) angepaßt werden.

Ein weiteres Problem herkömmlicher Roboterköpfe mit Picking-Nadeln besteht in der mangelnden Dosierbarkeit der Probenaufnahme bzw. -abgabe. Die Menge der beim Eintauchen einer Pikking-Nadel in eine Flüssigkeit durch Adhäsionskräfte aufgenommenen Probe ist substanzabhängig und mit der Eintauchtiefe veränderlich. Die Probenabgabe ist ebensowenig reproduzierbar. Außerdem können jeweils nur sehr geringe Probenmengen bearbeitet oder übertragen werden.

Ein weiterer Nachteil herkömmlicher Spotting-Roboter bezieht sich auf die Übertragung von Proben zwischen Substraten mit verschiedenen geometrischen Formaten. Wenn beispielsweise PCR-Produkte von einer Mikrotiterplatte (üblicherweise im Raster 16 · 24 mit 384 Vertiefungen) aufgenommen und auf einen Glasträger abgelegt werden sollen, werden bisher Nadelmatrizen mit einem an den Glasträger (z.B. Objektträger) angepaßten Raster von 4 · 4 Nadeln verwendet. Bei einem Arbeitsschritt (Aufnehmen der Klone und Aufbringen auf den Glasträger) können somit nur 16 Klone transferiert werden. Anschließend muß die Nadelmatrix mit dem kleinen Raster zunächst gewaschen, sterilisiert und getrocknet werden, um anschließend neue Klone übertragen zu können. Für 384 Proben sind somit bisher insgesamt 24 Transferschritte und Waschgänge erforderlich. Dies bedeutet einen hohen Zeitaufwand bzw. einen geringen Probendurchsatz und Nachteile bei der Genauigkeit der Probenplazierung auf dem Glasträger. Nach jeder Probenablage wird nämlich der Dosierkopf mit der 4 · 4-Nadelmatrix relativ weit verfahren. Durch die langen Fahrwege entstehen Ungenauigkeiten bei der Positionierung, so daß die Probendichte auf dem Glasträger beschränkt bzw. die Probenanordnung nicht reproduzierbar ist. Damit können sich anschließende Nachweisverfahren (z.B. optische Probenvermessung, Fluoreszenzmessung) nicht mit der heute verfügbaren Ortsauflösung voll ausgenutzt werden.

Ein genereller Nachteil herkömmlicher Dosierköpfe besteht in deren Beschränkung auf reine Dosieraufgaben. Bei der Probenmanipulierung ist es jedoch auch erforderlich, plattenförmige Substrate oder Mikrotiterplatten mit Proben zwischen verschiedenen Bearbeitungsstationen zu bewegen. Hierzu muß bei herkömmlichen Laborsystemen ein gesonderter Manipulatorkopf eingesetzt werden.

Es ist die Aufgabe der Erfindung, einen gegenüber den herkömmlichen Roboterköpfen von Picking-/Spotting-Anlagen verbesserten Dosierkopf anzugeben, mit dem die Geschwindigkeit der Bearbeitung einer Vielzahl von Proben erhöht wird und der dabei einen genügend einfachen Aufbau besitzt, so daß die Beweglichkeit oder Verfahrbarkeit des Dosierkopfs gegenüber herkömmlichen Roboterköpfen nicht eingeschränkt ist. Der Dosierkopf soll insbesondere auch dahin verbessert sein, daß vorbestimmte Probenmengen mit einer erhöhten Genauigkeit und Reproduzierbarkeit aufgenommen oder abgegeben werden können. Eine Aufgabe der Erfindung ist es auch, Verfahrensweisen zur Verwendung eines derartigen Dosierkopfes anzugeben.

Diese Aufgaben werden durch Vorrichtungen und Verfahren mit den Merkmalen gemäß den Patentansprüchen 1 bzw. 16 und 17 gelöst. Vorteilhafte Ausführungsformen der Erfindung ergeben sich aus den abhängigen Ansprüchen.

Gemäß einem ersten wichtigen Gesichtspunkt der Erfindung wird ein Dosierkopf angegeben, der mit einer Stelleinrichtung frei verfahrbar ist und eine Vielzahl von separat zur Probenaufnahme oder -abgabe ansteuerbaren Dosiereinrichtungen besitzt, die jeweils mit einem zugehörigen Betätigungselement (Stell- und Schaltelemente) betätigbar sind, wobei eine mit dem Dosierkopf verfahrbare Steuereinrichtung vorgesehen ist, mit der jedes Betätigungselement einzeln und unabhängig von der Ansteuerung der übrigen Betätigungselemente ansteuerbar ist. Unter "Dosieren" wird nicht nur das quantitative Zumessen von Stoffmengen, sondern allgemein jeder qualitative oder quantitive Vorgang der Probenaufnahme, -abgabe, -übertragung, -bewegung oder dgl. verstanden. Als Dosiereinrichtung ist entsprechend jedes Mittel zum Dosieren bestimmter Probenmengen einsetzbar. Hierzu zählen alle Pipettier-, Abtropf-, Saug-, Pump-, Strahl-, Spritz- oder sonstigen Dispensiereinrichtungen zum Dosieren vorbestimmter Fluidmengen. Vorzugsweise wird die Erfindung jedoch mit Dosiereinrichtungen zum Dosieren von kleinsten Flüssigkeitsmengen im nl- oder µl-Bereich, z.B. mit den genannten Picking-Nadeln oder mit Mikropipetten oder Mikrodispensern, implementiert.

Die Stellelemente zur Betätigung der Dosiereinrichtungen sind in Abhängigkeit von deren Gestalt ausgebildet. Anwendungsabhängig können beliebige mechanische Stellelemente vorgesehen sein, die elektromagnetisch, hydraulisch oder pneumatisch betätigbar sind. Bei den genannten Einrichtungen zur Dosierung von Mikrotropfen werden vorzugsweise hydraulisch oder pneumatisch betätigte Stellzylinder (im folgenden: Pneumatikzylinder) als Betätigungselemente verwendet. In diesem Fall ist jeder Pneumatikzylinder über eine Druckleitung und ein mit der Steuereinrichtung betätigbarem Ventil mit einer Arbeitsdruckleitung verbunden.

Die Steuereinrichtung ist Teil des Dosierkopfes. Sie umfaßt eine Schaltung, die insbesondere einen Befehlseingang und eine Vielzahl von Steuerausgängen entsprechend der Anzahl von Stellelementen besitzt. In Abhängigkeit von einem vorbestimmten Befehlssignal am Befehlseingang ist die Steuereinrichtung dazu eingerichtet, einen oder mehrere der Steuerausgänge zeitgleich, zeitlich versetzt oder zeitlich getrennt, unabhängig voneinander mit elektrischen Steuersignalen zu beaufschlagen, auf die die Stellelemente betätigt werden. Die Steuereinrichtung wird vorzugsweise durch einen Mikroprozessor gebildet, der eine serielle Schnittstelle als Befehlseingang und die genannte Vielzahl von Steuerausgängen besitzt. Die serielle Schnittstelle ist mit einem Hauptrechner z.B. einer Picking/Spotting-Anlage verbunden.

Für die Dosierung von Mikrotropfen sind die Dosiereinrichtungen vorzugsweise regelmäßig mit einer Anordnung am Dosierkopf angebracht, die der relativen Anordnung von Proben auf einem Substratträger entspricht. Die Anordnung ist vorzugsweise auf Arbeitsvorgänge an Mikrotiterplatten angepaßt. In diesem Fall sind die Dosiereinrichtungen matrixartig entsprechend der Matrixanordnung der Mikrotitervolumina ausgerichtet. Dementsprechend bilden auch die Stellelemente eine Matrixanordnung, die im folgenden als Stellmatrix oder als Pneumatikzylinder-Matrix bezeichnet wird. Ein wichtiges Merkmal der Erfindung besteht darin, daß die Dosiereinrichtungen bzw. die Stellmatrix frei adressierbar sind, wodurch erstmalig ein Dosierkopf mit parallelem Betrieb der Dosiereinrichtungen geschaffen wird.

Es kann nach Art eines Baukastensystems vorgesehen sein, daß die Stellmatrix fest am Dosierkopf integriert ist und einen Ansatz für frei wählbare, austauschbare Halterungsblöcke mit verschiedenen Arten von Dosiereinrichtungen bildet.

Gemäß einem zweiten wichtigen Gesichtspunkt der Erfindung wird ein Dosierkopf der genannten Art mit einer Vielzahl von Picking-Nadeln oder Mikropipetten angegeben, die matrixartig an einem Halterungsblock angebracht sind, der mit einer frei adressierbaren Stellmatrix zusammenwirkt. Die Mikropipetten sind gleichförmig am Halterungsblock derart angebracht, daß in einem Grundzustand die Enden von Betätigungsstiften (Pipettenkolben) der Mikropipetten im wesentlichen in einer Ebene liegen und jeweils mit den Enden von Stellnadeln oder -stiften der Stellmatrix in Kontakt stehen. Der Betätigungsstift einer Mikropipette ist jeweils mit einer Stiftfeder gegenüber der Mikropipette vorgespannt. Bei Betätigung eines Stellelements der Stellmatrix (z.B. eines Pneumatikzylinders) wird der entsprechende Betätigungsstift gegen die Stiftfeder bewegt, so daß sich das Pipettenvolumen verringert. Bei entsprechender Freigabe des Stellelements drückt die Stiftfeder den Betätigungsstift zurück, so daß sich das Pipettenvolumen wieder vergrößert. Beim Einsatz von Picking-Nadeln gilt entsprechendes.

Mit dieser Anordnung wird erstmalig ein Dosierkopf geschaffen, der eine reproduzierbare und genaue Dosierung einer Vielzahl von simultan bearbeiteten Proben ermöglicht.

Gemäß einem dritten wichtigen Gesichtspunkt der Erfindung wird der genannte Dosierkopf mit der Mikropipettenmatrix mit einer derartigen Führung am Halterungsblock versehen, daß bei Betätigung des jeweiligen Stellelements die entsprechende Mikropipette vor Änderung des Pipettiervolumens zunächst von einer zurückgezogenen Grundposition in eine gegenüber dem Halterungsblock hervorragende Pipettierposition bewegt wird. Damit wird erstmalig ein Dosierkopf geschaffen, bei dem nach Art der vorspringenden Picking-Nadeln frei adressierbar selektiv einzeln oder gleichzeitig Mikropipetten in die Pipettierposition gefahren und betätigt werden. Damit wird beim Zusammenwirken mit z.B. einer Mikrotiterplatte das Eintauchen der beim jeweiligen Vorgang gerade nicht verwendeten Mikropipetten und damit deren Kontaminierung vermieden.

Gegenstand der Erfindung ist somit auch die Kombination einer Mikropipette, die einen Zylinder, eine Pipettenspitze und einen Pipettenkolben aufweist, der mit einer Stiftfeder gegenüber dem Zylinder vorgespannt ist, mit einem Träger oder einer Halterung derart, daß die Mikropipette gegenüber dem Träger parallel zur Pipettenlängsrichtung beweglich ist. Der Zylinder der Mikropipette ist gegenüber dem Träger mit einer Zylinderfeder vorgespannt. Die Bewegung der Mikropipette gegenüber dem Träger erfolgt zwischen zwei Endlagen entsprechend maximaler Ausdehnung bzw. maximaler Kompression der Zylinderfeder. Erfindungsgemäß ist die Federkonstante der Zylinderfeder wesentlich geringer als die der Stiftfeder, so daß die Pipettenbewegung durch eine axiale Kraft auf den Pipettenkolben bewirkt werden kann.

Die Doppelfederführung der Mikropipette bzw. des Pipettenkolbens ermöglicht, daß mit einer einfachen Betätigung des Pipettenkolbens zunächst die Mikropipette gegenüber dem Träger in eine Pipettierposition vorgeschoben und anschließend der Pipettenkolben betätigt wird.

Gemäß einem vierten wichtigen Gesichtspunkt der Erfindung wird ein Dosierkopf mit einer Vielzahl von Dosiereinrichtungen geschaffen, die nicht einzeln, sondern gruppen- oder blockweise jeweils mit einer Betätigungseinrichtung verbunden sind. Die am Dosierkopf vorgesehene und mit diesem verfahrbare Steuereinrichtung besitzt in diesem Fall eine Zahl von Steuerausgängen, die der Zahl der gebildeten Gruppen oder Blöcke von Dosiereinrichtungen entspricht, wobei beim Betrieb des Dosierkopfes ein oder mehrere Blöcke unabhängig voneinander betätigbar sind. Diese Ausführungsform der Erfindung ist insbesondere zur Übertragung von Proben aus einer Anordnung mit einem ersten geometrischen Format in eine Targetanordnung mit einem zweiten, anderen Format vorgesehen. Das erste Format ist beispielsweise durch die Matrixanordnung einer Mikrotiterplatte gegeben. Das zweite Format kann durch ein gegenüber der Mikrotiterplatte verändert gestaltetes Target, z.B. ein Glastarget in Form eines Objektglases, gegeben sein. Erfindungsgemäß ist vorgesehen, daß Dosiereinrichtungen (z.B. Nadeln oder Mikropipetten) mit Kopplungseinrichtungen oder Blockrahmen zu Blöcken zusammengefaßt sind, so daß die von einem Block gebildete Anordnung der Dosiereinrichtungen ein Format besitzt, das dem Format eines vorbestimmten Zieltargets entspricht. Eine bevorzugte Blockbildung umfaßt 4 · 4 Dosiereinrichtungen, die jeweils zu einem Block zusammengefaßt sind. Die Blockbildung besitzt besondere Vorteile bei der Probendosierung zwischen Probenanordnungen veschiedener Formate und insbesondere bei der Schaffung von Proben-Arrays auf Glasträgern mit einer Probendichte, die an die verbesserten Auflösungsfähigkeiten moderner optischer Detektionsverfahren angepaßt ist.

Weitere wichtige Gesichtspunkte der Erfindung bestehen in der Anbringung einer Deckelstation und einer Greiferstation am Dosierkopf. Dieser integrale Aufbau erlaubt eine effektivere Handhabung von Trägersubstraten bzw. deren Abdeckungen.

Bei Anwendung der Erfindung können die oben hervorgehobenen Gesichtspunkte gemeinsam oder getrennt realisiert sein.

Die Erfindung liefert die folgenden Vorteile. Die Probenbearbeitung, insbesondere im Bereich molekulargenetischer, biochemischer oder medizinischer Anwendungen, wird wesentlich beschleunigt. Die Proben verweilen für kürzere Zeiten im Dosierkopf und werden damit geschont. Der neue Dosierkopf ist universell anwendbar. Die Genauigkeit der Dosierung wird erhöht. Durch die Verkürzung von Öffnungszeiten der Substratträgerabdeckungen wird eine Verringerung der Kontaminations- und Verdunstungsgefahr erreicht. Beim erfindungsgemäßen Dosierkopf sind die Dosiereinrichtungen nicht fest mit der Ansteuereinheit verbunden, sondern als Module austauschbar. Damit wird der Einsatzbereich des Dosierkopfes erheblich erweitert. Dies ergibt sich auch aus der Kombination der Dosierfunktion mit den Funktionen des Manipulierens von Substraten oder Mikrotiterplatten. Im erfindungsgemäßen Dosierkopf kann ein eigener Steuerrechner untergebracht werden. Der Dosierkopf ist damit frei programmierbar und besonders gut auch an komplizierte Probenmanipulierungsaufgaben anzupassen.

Weitere Vorteile und Einzelheiten der Erfindung werden im folgenden unter Bezug auf die beigefügten Zeichnungen beschrieben. Es zeigen:
- Fig. 1A: eine schematische Seitenansicht eines erfindungsgemäßen Dosierkopfes;
- Fig. 1B-1D: weitere Ansichten eines erfindungsgemäßen Dosierkopfes von den Seiten und von unten mit einer Illustration zusätzlicher Einzelheiten;
- Fig. 2: eine schematische Ansicht zur Illustration des Zusammenwirkens einer Stellmatrix mit einer Vielzahl von Dosiereinrichtungen gemäß einer ersten Ausführungsform der Erfindung;
- Fig. 3: eine Ausschnittsdarstellung der erfindungsgemäßen Anbringung von Mikropipetten;
- Fig. 4: eine Illustration der zweistufigen Betätigung von Mikropipetten gemäß einer weiteren Ausführungsform der Erfindung;
- Fig. 5: eine schematische Ausschnittsdarstellung einer weiteren Ausführungsform der Erfindung;
- Fig. 6: eine schematische Ausschnittsdarstellung zur Illustration der erfindungsgemäßen Blockbildung und
- Fig. 7A-7D: weitere schematische Illustrationen der Dosierstationen erfindungsgemäßer Dosierköpfe.

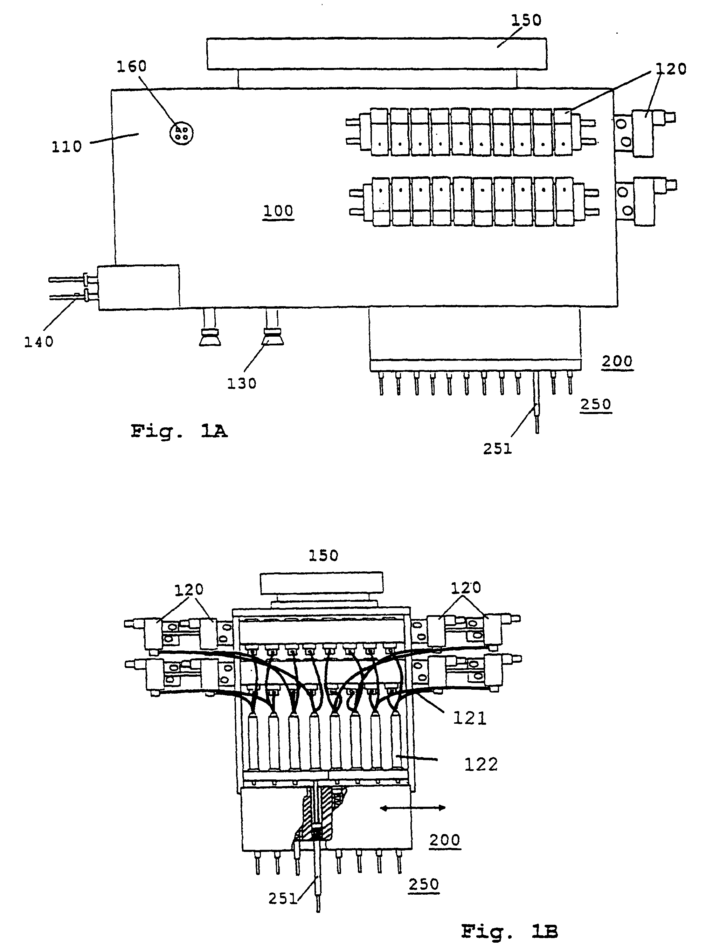

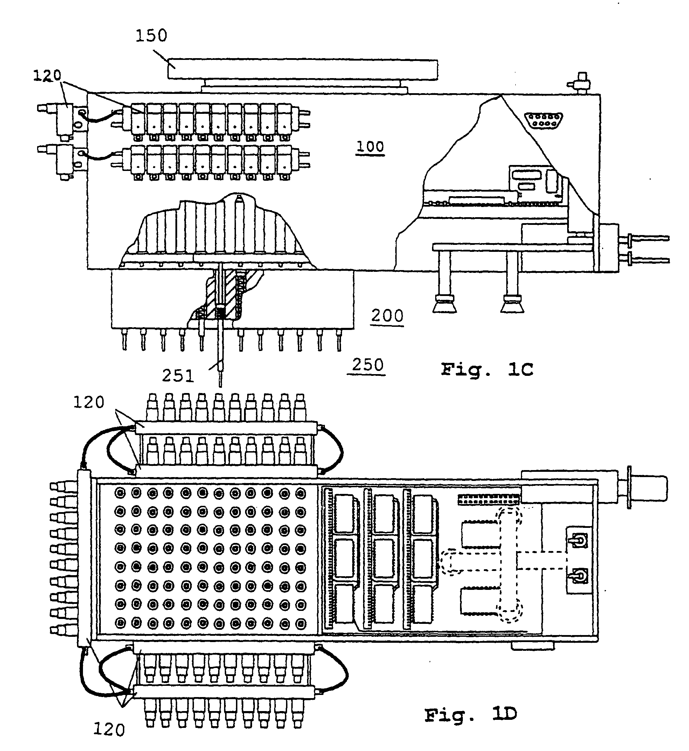

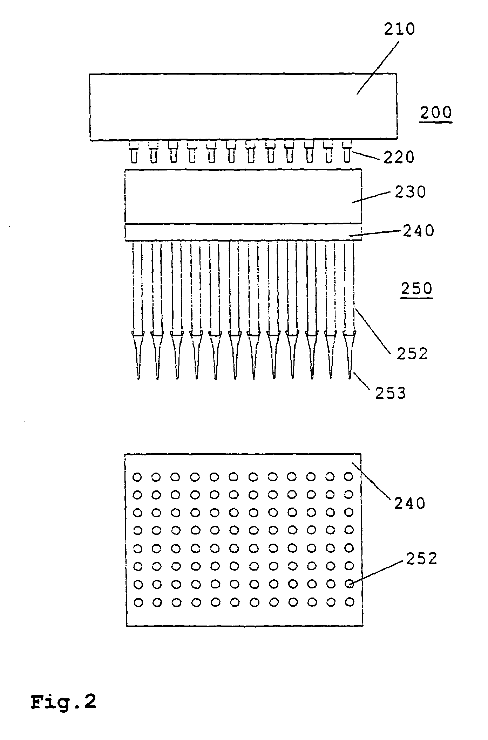

Ein erfindungsgemäßer Dosierkopf 100 ist in schematischer Seitenansicht in Fig. 1A gezeigt. Am Rahmen oder Gehäuse 110 sind eine Dosierstation 200 (s. Fig. 2) mit einer Vielzahl von Dosiereinrichtungen 250, eine Vielzahl von Schaltelementen 120, die jeweils einem (nicht dargestellten) Stellelement jeder Dosiereinrichtung zugeordnet sind, eine Deckelstation 130, eine Greiferstation 140, eine Halterung 150, die zur Verbindung mit einem Verfahrantrieb, z.B. einer Picking-/Spotting-Anlage, eingerichtet ist, und Anschlüsse 160 für Versorgungsleitungen angebracht. Jedes der Schaltelemente 120 besitzt eine gesonderte Steuerverbindung mit der (nicht sichtbaren) Steuereinrichtung im Gehäuse 110. Die Steuerverbindung eines Schaltelements ist ausschließlich mit einem Steuerausgang der Steuereinrichtung verbunden und von den übrigen Schaltelementen getrennt.

Bei der dargestellten Ausführungsform sind die Dosiereinrichtungen 250 der Dosierstation 200 Picking-Nadeln oder Pins 251. Die Dosierstation 200 ist an der in Betriebsposition unteren Seite des Dosierkopfes 100 angebracht. Die Picking-Nadeln sind regelmäßig ausgerichtet und ragen aus einer Trägerplatte derart, daß in einer zurückgezogenen Grundposition die Nadelenden im wesentlichen in einer Ebene liegen. Je nach Ansteuerung der den Nadeln zugeordneten Stellelemente (s. unten) können eine oder mehrere Picking-Nadeln (z.B. Pin 251) von der Grundposition in eine herausragende Probenposition verfahren werden. Die frei und unabhängig voneinander ansteuerbaren Pikking-Nadeln ergeben vorteilhafterweise erweiterte Einsatz- und Anwendungsmöglichkeiten gegenüber der Funktion eines herkömmlichen Picking-/Spotting-Roboterkopfes. Dies betrifft insbesondere die Probenumsortierung, die beispielsweise beim Umsortieren von Klonbibliotheken (sogenanntes "Rearraying") von Interesse ist. Hierbei werden aus Mutterplatten (Mikrotiterplatten) mit Hilfe von Nadeln geringe Menge lebensfähiger Organismen entnommen und auf Tochterplatten, die mit einem Flüssigmedium gefüllt sind, überführt. Gegenüber dem bisherigen sequentiellen Rearraying besteht der Vorteil der parallelen Bearbeitung einer Vielzahl von Klonübertragungen. Dadurch wird nicht nur der Gesamtzeitaufwand deutlich reduziert, sondern auch ein Einfluß nachteiliger Umweltbedingungen reduziert.

Die Schaltelemente 120 sind elektrisch betätigbare Magnetventile, die in Reaktion auf ein Schalt- oder Steuersignal von der Steuereinrichtung einen über eine (nicht dargestellte) Arbeitsdruckversorgungsleitung bereitgestellten Arbeitsdruck (z.B. im Bereich von 5 ... 10 bar) auf das zugehörige Stellelement in Form eines Pneumatikzylinders geben. Von jedem Magnetventil führt eine (nicht dargestellte) Druckleitung im Inneren des Gehäuses 110 zum jeweiligen Pneumatikzylinder.

Die Deckelstation 130 ist zum zeitweisen Öffnen von Proben- oder Reaktionsbehältern oder Abdeckungen von Mikrotiterplatten vorgesehen. Die Proben- oder Reaktionsbehälter oder Mikrotiterplatten können ferner mit der Greiferstation 140 (Parallelgreifer) des Dosierkopfes transportiert werden. Die integrierte Anbringung der Deckelstation 130 und der Greiferstation 140 am Dosierkopf 100 besitzt den zusätzlichen Vorteil, daß die Multifunktionalität des Dosierkopfes, die durch die parallele Ansteuerung von Dosiereinrichtungen erzielt wird, noch erweitert wird.

Der dargestellte Dosierkopf 100 besitzt eine Breite von rd. 35 cm und eine Höhe von rd. 15 cm (Gehäuse mit Halterung) bzw. 20 bis 25 cm (im Bereich der Dosierstation). Die zugehörige Gehäusetiefe (mit Schaltelementen) beträgt rd. 30 cm. Die Zahl der Picking-Nadeln beträgt beispielsweise 96 oder 384. Ein wichtiger Vorteil der Erfindung besteht darin, daß erstmalig eine derart große Zahl von Dosiereinrichtungen gemeinsam mit den jeweiligen Pneumatikzylindern bzw. Stellelementen am Dosierkopf angebracht sind. Durch Verlagerung der Schaltvorgänge von einem ortsfesten Basissystem (z.B. der Picking-/Spotting-Anlage) in den Dosierkopf wird trotz der großen Anzahl von Dosiereinrichtungen dennoch die freie Verfahrbarkeit des Dosierkopfes mit praktikablen Fahrgeschwindigkeiten sichergestellt.

Die Picking-Nadeln 251 der Dosierstation 200 gemäß Fig. 1A können direkt an den Pneumatikzylindern angebracht sein, falls diese mit geeigneten Rückzugsfedern ausgerüstet sind. Gemäß einem bevorzugten Aufbau sind die Picking-Nadeln jedoch federgeführt an der Trägerplatte 240 angebracht, wie dies im einzelnen unten unter Bezug auf Mikropipetten erläutert wird, ohne mit den Pneumatikzylindern dauerhaft verbunden zu sein. Die Anbringung der frei ansteuerbaren Matrix von Stellelementen (Pneumatikzylinder) am Dosierkopf ermöglicht es, anwendungsabhängig Trägerplatten mit Dosiereinrichtungen verschiedenen Typs einzusetzen, die dann jeweils von den Pneumatikzylindern verstellt werden. Es kann vorgesehen sein, daß die Trägerplatte 240 mit geeigneten Befestigungs- oder Rastmitteln (nicht dargestellt) lösbar bzw. austauschbar an der Dosierstation 200 angebracht ist.

Weitere Einzelheiten eines erfindungsgemäßen Dosierkopfes 100 sind in den Fign. 1B bis 1D illustriert. Der Aufbau des Dosierkopfes 100 entspricht im wesentlichen dem des Dosierkopfes 100 gemäß Fig. 1A, so daß entsprechende Komponenten mit gleichen Bezugszeichen bezeichnet sind. Zusätzlich zu Fig. 1A sind die Druckleitungen 121 von den Schaltelementen 120 zu den Pneumatikzylindern 122 dargestellt. Die Bereitstellung von Pneumatikzylindern als Antrieb für die Dosiereinrichtungen stellt einen wesentlichen Vorteil der Erfindung dar. Die Pneumatikzylinder können erheblich dichter als z.B. herkömmliche Schrittmotorantriebe angeordnet werden. Des weiteren ist in den Fign. 1C und 1D die Unterbringung eines kompletten Steuerrechners im erfindungsgemäßen Dosierkopf illustriert. Einzelheiten der Dosierstation 200 werden unten beschrieben.

Fig. 2 zeigt Einzelheiten des erfindungsgemäßen Dosierkopfes zur Illustration des Zusammenwirkens der Stellelemente mit den Dosiereinrichtungen. Die Dosierstation 200 besteht aus einer Stellmatrix 210, einem Halterungsblock und den Dosiereinrichtungen 250 (hier z.B.: Mikropipetten). Die Stellmatrix 210 besteht aus den Pneumatikzylindern, die jeweils eine Stellnadel 220 besitzen. Die Pneumatikzylinder können, wie oben beschrieben, durch Ansteuerung des jeweiligen Magnetventils betätigt werden, so daß die Stellnadel 220 auf das Ende eines Betätigungsstifts einer zugehörigen Dosiereinrichtung im Halterungsblock gedrückt wird. Aus Gründen der Übersichtlichkeit sind in Fig. 2 (links) die Stellnadeln 220 mit Abstand vom Halterungsblock gezeichnet. In der Praxis berühren jedoch die Stellnadeln 220 in Grundposition die Enden der Betätigungsstifte (z.B. Pipettenkolben) der Dosiereinrichtungen.

Der Halterungsblock besteht aus einem Führungsblock 230 und der Trägerplatte 240, aus denen nach unten die Mikropipetten 252 mit den zu einem Trägersubstrat weisenden Pipettenspitzen 253 ragen.

Der rechte Teil von Fig. 2 zeigt die Matrixanordnung der Mikropipetten 252 mit einer schematischen Ansicht der Trägerplatte 240 von unten. Aus der Trägerplatte 240 ragen die spalten- und reihenweise angeordneten Mikropipetten 252, deren Anordnung hier gerade der Position von 96 Mikrotitervolumina oder - behältnissen einer Mikrotiterplatte entsprechen.

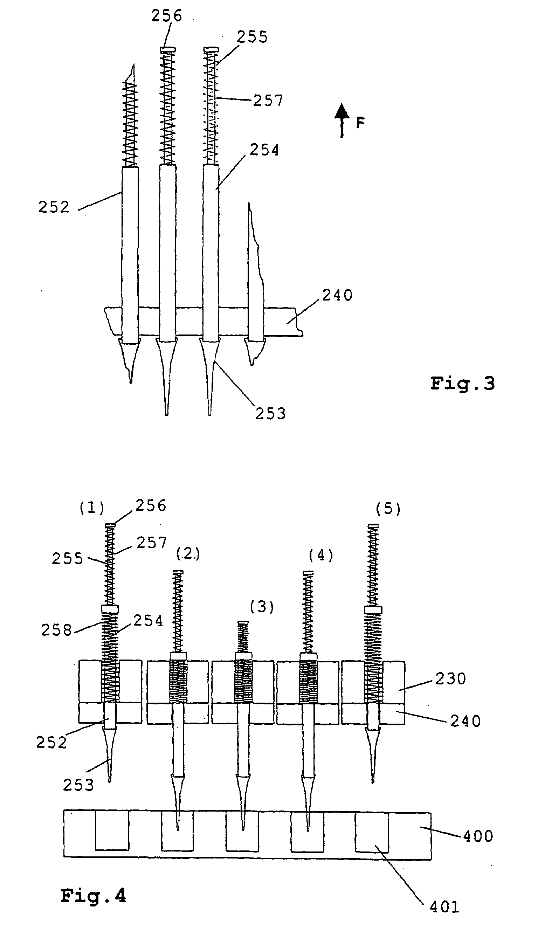

Einzelheiten der Mikropipettenanbringung im Halterungsblock sind in Fig. 3 ausschnittsweise dargestellt. Jede Mikropipette 252 besteht aus einem Zylinder 254 mit der Pipettenspitze 253 an einem und dem Betätigungsstift 255 (Ende des Pipettenkolbens) am anderen Ende. Im Inneren des Zylinders 254 steht der Pipettenkolben unter Rückzugswirkung einer Kolbenfeder zwischen dem oberen Zylinderende und dem unteren Kolbenende. Zwischen der Endauflage 256 des Pipettenkolbens 255 und dem Zylinder 254 ist eine in Grundposition leicht vorgespannte Stiftfeder 257 vorgesehen. Bei der in Fig. 3 dargestellten Ausführungsform der Erfindung sind die Zylinder 254 fest an der Trägerplatte 240 angebracht. Im Grundzustand ist der Pipettenkolben 255 unter Wirkung der Federkraft (Pfeil F) vollständig zurückgezogen, so daß im Zylinder ein großes Pipettiervolumen gebildet wird. Bei Betätigung des zugehörigen Stellelements wird (s. Fig. 2) mit einem Pneumatikzylinder der Stellmatrix 210 eine Stellnadel 220 auf die Endauflage 256 gedrückt. Der Pneumatikzylinder arbeitet gegen die Federkraft der Stiftfeder 257 und der inneren Kolbenfeder und schiebt den Pipettenkolben 255 hin zur Pipettenspitze. Bei Abschaltung des Arbeitsdrucks vom Pneumatikzylinder erfolgt wiederum die Rückführung des Pipettenkolbens 255 unter Wirkung der Stift- und Kolbenfedern 257. Beim bestimmungsgemäßen Einsatz des Dosierkopfes werden diese Bewegungen des Pipettierkolbens 255 zwischen dem Grundzustand und dem gespannten Zustand zur Probenaufnahme aus einem Probenbehältnis oder zu einer entsprechenden Probenabgabe verwendet.

Bei der obengenannten Implementierung der Erfindung mit Picking-Nadeln werden diese analog zu den Pipettenkolben in äußeren Zylindern geführt und ragen für den Eintauchvorgang in eine Probe aus den Enden der Führungszylinder heraus.

Die Mikropipetten gemäß Fig. 3 können zur Aufnahme bzw. Abgabe vorbestimmter Flüssigkeitsvolumina im Bereich von z.B. 1 µl bis 200 µl eingerichtet sind. Bei genügend konstantem Arbeitsdruck kann über die veränderliche Schaltzeit der Pneumatikzylinder das Pipettiervolumen im Zylinder 254 eingestellt werden.

Beim Einsatz eines Dosierkopfes mit einer Dosierstation gemäß Fig. 3 tauchen beim Pipettierprozeß sämtliche Pipettenspitzen in die Probenbehälter ein. Entsprechend der vorbestimmten Adressierung der Stellmatrix werden jedoch nur bestimmte Pipettenspitzen mit Probenmaterial gefüllt. Anschließend wird der Dosierkopf zur Probenabgabe oder weiteren -manipulierung zu einem weiteren Substratträger oder einer veränderten Substratträgerposition gefahren.

Die Ausführungsform der Erfindung mit selektiv ansteuerbaren Mikropipetten ermöglicht vorteilhafterweise die folgenden Anwendungen.

Soll aus einer Sammlung von organischen oder anorganischen Lösungen (z.B. von einer Naturstoffbibliothek oder einer Bibliothek aus synthetisch hergestellten Substanzen) eine Teilsammlung angelegt werden, so können aus den Mutterplatten einzelne Proben (Anzahl z.B. bis zu 96) entnommen und anschließend in eine Tochterplatte überführt werden. Anschließend ist ein Waschschritt mit einer Unterdruckbehandlung (Vakuumabsaugung) vorgesehen, um Substanzrückstände an den Pipettenspitzen zu beseitigen und Kontaminationen bei nachfolgenden Pipettierschritten zu vermeiden.

Soll in einer Mikrotiterplatte eine Sammlung einer bestimmten Salzlösung unterschiedlicher Konzentrationen angelegt werden, wie dies beispielsweise bei einem Protein-Kristallisationsexperiment von Interesse ist, so können vorbestimmte Konzentrationsgradienten durch die erfindungsgemäßen Einzelpipettiervorgänge erzeugt werden.

Sind bei einer Genbibliothek (genomisch oder cDNA) bestimmte Einzelklone als fehlerhaft erkannt (z.B. Kontamination, kein Vektor, kein Insert oder dgl.), so können mit dem erfindungsgemäßen Dosierkopf die fehlerhaften Einzelklone wirksam aus den Mikrotiterplatten entfernt werden. Nach einem ersten Schritt der Entfernung des Einzelklons erfolgt am entsprechenden Mikrotitervolumen ein Reinigungsschritt, bei dem das Mikrotitervolumen z.B. mit einer Desinfektionslösung gespült wird.

Die hier genannten Anwendungsmöglichkeiten stellen einen entscheidenden Fortschritt gegenüber den bisher verwendeten Pikking-Nadel-Roboterköpfen mit sequentiell angesteuerten Pikking-Nadeln dar, die die hier genannten Aufgaben nicht oder nur beschränkt erfüllen konnten.

Fig. 4 zeigt einen alternativen Aufbau, bei dem mit der Betätigung eines Pneumatikzylinders der Stellmatrix 210 (s. Fig. 2) nicht nur der Pipettenkolben der zugehörigen Mikropipette, sondern auch der Pipettenzylinder bewegt wird. Bei dieser Ausführungsform (Fig. 4) besteht die Mikropipette 252 wiederum aus dem Zylinder 254 mit der Pipettenspitze 253 und dem Pipettenkolben 255, dessen Endauflage 256 mit der Stellnadel (nicht dargestellt) der Stellmatrix zusammenwirkt. Die Trägerplatte 240 und der Führungsblock 230 bilden eine Halterung für die Mikropipetten 252, in der diese zwischen einem zurückgezogenen Grundzustand (oberer Anschlag) und einem vorgeschobenen Pipettierzustand (unterer Anschlag) in einer Richtung senkrecht zur Ebene der Trägerplatte 240 beweglich sind. Hierzu ist jede Mikropipette 252 neben der Stiftfeder 257 zusätzlich mit einer Zylinderfeder 258 zwischen dem oberen Zylinderende und der Trägerplatte 240 versehen, wobei die Federn zur Realisierung der Bewegungsabläufe zwischen dem Grund- und dem Pipettierzustand wie folgt mit der Stiftfeder 257 zusammenwirken.

Erfindungsgemäß besitzt die Zylinderfeder 258, die das Ende des Zylinders 254 gegenüber dem Trägerblock 240 vorspannt, eine geringere Federkonstante als die Stiftfeder 255, die das Ende des Pipettenkolbens 256 gegenüber dem Ende des Zylinders 254 vorspannt. Das Verhältnis der Federkonstanten ist derart gewählt, daß bei Einwirkung einer Stellkraft auf die Endauflage 256 zuerst über die härtere Stiftfeder 257 die Zylinderfeder 258 und anschließend die Stiftfeder 257 komprimiert wird. In der Praxis können sich beide Vorgänge überlappen, wobei jedoch die Bewegung der Mikropipette vom Grund- in den Pipettierzustand wesentlich schneller als die Bewegung des Pipettenkolbens 255 vom Grundzustand in den vorgespannten Zustand erfolgen soll. Gemäß einer bevorzugten Ausführungsform der Erfindung ist die Federkonstante der Zylinderfeder etwa einen Faktor 10 geringer als die Federkonstante der Stiftfeder. Im einzelnen ergeben sich die in Fig. 4 illustrierten Bewegungsabläufe.

Der Zustand (1) zeigt die Mikropipette im Grundzustand, d.h. sowohl der Pipettenkolben 255 als auch der Zylinder 254 befinden sich im zurückgezogenen, oberen Zustand. Der Zustand (2) zeigt die Bewegung des Zylinders 254 vom Grund- in den Pipettierzustand, in dem die ausgewählte Pipette z.B. in das Mikrotitervolumen 401 einer Mikrotiterplatte 400 abgesenkt ist. Die Zustände (3) und (4) entsprechen dem eigentlichen Pipettiervorgang, bei dem der Pipettenkolben 255 in den vorgespannten Zustand (kleines Pipettenvolumen).gefahren (3) und dann zum Aufsaugen einer Probenflüssigkeit zurückgezogen (4) wird. Anschließend erfolgt unter der Wirkung der Zylinderfeder 258 die Rückwärtsbewegung in den Grundzustand der Pipette (5).

Die Gestaltung gemäß Fig. 4 besitzt den Vorteil, daß diejenigen Pipetten, die bei einem programmierten Pipettiervorgang nicht benötigt werden, auch nicht in die Mikrotitervolumina eintauchen, so daß Kontaminationen verhindert werden. Dies ist insbesondere beim Pipettieren von lebenden Organismen oder Zellen oder anderen biologisch hochaktive Substanzen (z.B DNA) in Lösungen von besonderem Vorteil. Ein erfindungsgemäßer Pipettierprozeß läuft erfindungsgemäß derart ab, daß zunächst der Dosierkopf über das Trägersubstrat (z.B. Mikrotiterplatte) gefahren und entsprechend der Adressierung der Stellmatrix (s. Fig. 2) zwischen 1 und 96 Pipetten in die Volumina des Trägersubstrats vorgeschoben werden. Daraufhin erfolgt die Probenaufnahme bzw. -abgabe an den ausgewählten Pipetten. Nach Freigabe der jeweils gewählten Pneumatikzylinder werden zunächst die Pipettenkolben nach oben bewegt (Ansaugen von Probenflüssigkeit) und dann die Pipettenzylinder selbst zurückgezogen.

Ein besonderer Vorteil der Erfindung besteht darin, daß der hier erläuterte Vorgang frei programmierbar und parallelisiert abläuft.

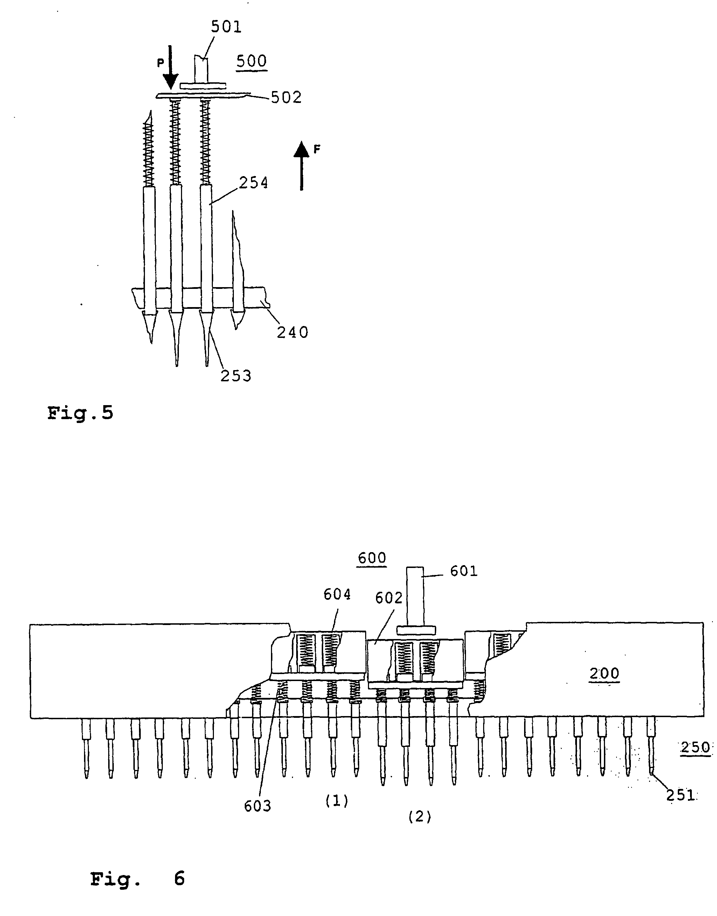

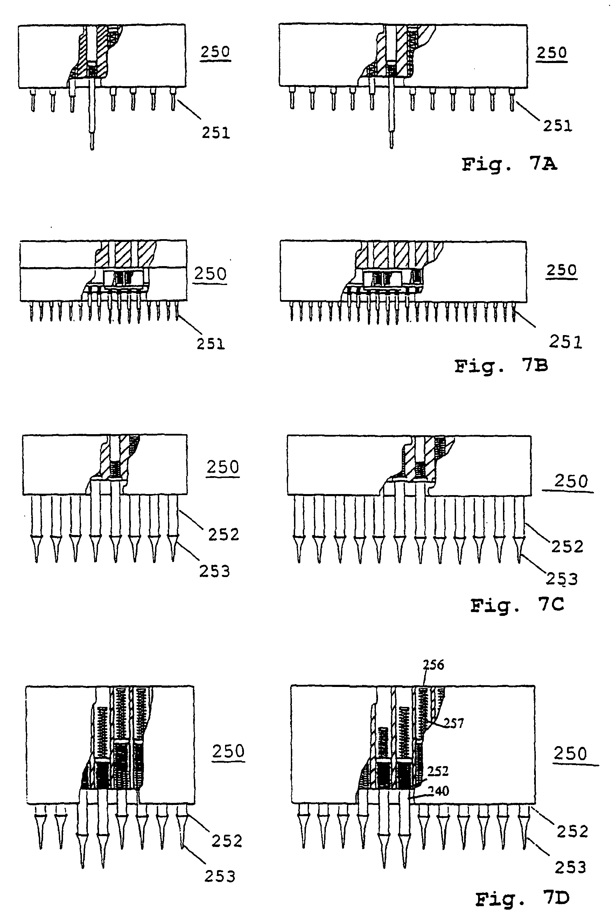

Eine weitere Ausführungsform der Erfindung ist ausschnittsweise in den Fign. 5 und 6 dargestellt. Die Gestaltung und Anbringung der Mikropipetten 252 ist dabei im wesentlichen gleich dem Aufbau gemäß Fig. 3, wobei jedoch zusätzlich eine Kopplungseinrichtung 500 oder ein Blockrahmen 600 zur simultanen oder blockweisen Betätigung einer Vielzahl von Mikropipetten vorgesehen ist. Die Kopplungseinrichtung 500 besteht aus einer Zylindereinrichtung 501 und einem Plattenelement 502 (sogenannte "Backplate"). Das Plattenelement 502 ist zwischen den Endauflagen 256 der Pipetten 252 und der Zylindereinrichtung 501 vorgesehen. Gemäß einer bevorzugten Ausführungsform wird die Zylindereinrichtung 501 durch einzelne Stellnadeln 220 (s. Fig. 2) gebildet. Die Zylindereinrichtung 501 ist dazu vorgesehen, auf sämtliche vom Plattenelement 502 erfaßten Pipetten eine gleichförmige Betätigungskraft (Pfeil P) auszuüben. Das Plattenelement 502 wird als dünnes Kunststoff- oder Blechbauteil bei abgenommener Trägerplatte 240 (s. Fig. 2) zwischen die Enden der Pipetten und die Stellmatrix 210 eingelegt.

Bei dieser Ausführungsform erfolgt der Pipettiervorgang derart, daß vor dem Eintauchen der Pipettenspitzen in die flüssigkeitsgefüllten Probenbehälter zunächst sämtliche Pipettenkolben innerhalb der Pipettenzylinder bewegt werden. Der Hub bestimmt die in der Folge aufzunehmende Flüssigkeitsmenge. Zusätzlich kann der Hub durch mechanische Anschläge eingestellt werden. Durch Absenken des Dosierkopfes werden sämtliche Pipettenspitzen in die Probenbehälter eingetaucht. Nach Freigabe der durch die Zylindereinrichtung 501 ausgeübten Kraft P werden die Pipettenkolben durch die Stiftfedern simultan nach oben geführt, wobei in sämtlichen Pipetten das gleiche Flüssigkeitsvolumen im Bereich von z.B. 1 bis 200 µl aufgenommen wird. Die Probenabgabe durch Ausstoß der Flüssigkeit erfolgt durch den entsprechenden, umgekehrten Ablauf.

Die Gestaltung gemäß Fig. 5 besitzt den Vorteil, daß die Probenaufnahme bzw. -abgabe an allen, durch das Plattenelement 502 zusammengefaßten Pipetten gleichförmig und ausgeglichen erfolgt. Das in die Dosierstation eingelegte Plattenelement 502 verbindet einen Teil der Pipette entsprechend einem vorbestimmten Muster.

Die Gestaltung gemäß Fig. 5 ist insbesondere für die folgenden Anwendungen einer Picking-/Spotting-Anlage von Vorteil. Beim Einsatz im Hochdurchsatz-Screening in Systemen zur Wirkstoffauffindung werden aus Mikrotiterplatten mit 96 oder 384 Einzelproben parallel Proben mit in allen Fällen identischen Volumina entnommen. Als Proben können wiederum Bibliotheken aus Naturstoff oder synthetischen Substanzen, aber auch andere Sammlungen von Substanzen, Substanzgemischen oder biologischen Systemen wie Mikroorganismen, pflanzlichen, tierischen oder menschlichen Zellen verwendet werden. Die Proben werden dann innerhalb der Anlage in Testbehälter überführt, wo die vorbestimmte Untersuchung auf biologische oder physiologische Wirksamkeit oder Eigenschaften hin erfolgt. Aus Proteinexpressionsbibliotheken können, nach einem Zentrifugationsschritt außerhalb der Anlage, Überstände der einzelnen Expressionsklone aus Mikrotiterplatten abgesaugt und in Testgefäße (z.B. Membranen oder weitere Mikrotiterplatten) überführt werden.

Ferner wird die parallele Entnahme von definierten Flüssigkeitsvolumina zum Zwecke des Verteilens auf neue Probenbehälter oder des Mischens mit anderen Substanzen erleichtert. Dies ist beispielsweise bei Tests von Substanzen (Antigene, Antikörper usw.) in ELISA-Tests, beim Ansetzen enzymatischer Reaktionen (Restriktionsverdaus, PCR, usw.) oder bei Tests von Enzymspezifitäten von Interesse.

Schließlich dient das erfindungsgemäße parallele Pipettieren von Substanzen in Lösungen der Synthese neuartiger Substanzen (kombinatorische Chemie). Die Synthesen können dabei auf festen Substratträgern (z.B. Kunststoffoberflächen in Mikrotiterplatten oder Membranen) oder in Lösungen durchgeführt werden. Beispiele hierfür sind die Synthesen von Peptiden oder Oligonukleotiden auf Membranen.

Eine weitere Abwandlung der in Fig. 5 gezeigten Ausführungsform der Erfindung ist zur Illustration der blockweisen Betätigung von Dosiereinrichtungen in Fig. 6 gezeigt. Fig. 6 ist eine Ausschnittsdarstellung einer Dosierstation 200 mit teilweise durchbrochen dargestellter Gehäusewand. Die Dosierstation umfaßt entsprechend den oben erläuterten Ausführungsformen eine Matrix aus Dosiereinrichtungen 250 in Gestalt von Picking-Nadeln 251. Die Picking-Nadeln 251 bilden ein 16 · 24-Raster entsprechend einer 384-er Mikrotiterplatte. Die Nadeln sind zu Nadelblöcken mit einem Raster von 4 · 4 Nadeln zusammengefaßt. Die Blockbildung wird durch eine Blockeinrichtung 600 bereitgestellt, die für jeden Block einen Blockrahmen 602 mit einem zugehörigen Betätigungselement 601 umfaßt. Die Blockrahmen 602 besitzen dieselbe Funktion wie das obengenannte Plattenelement 502 und sind dazu vorgesehen, die vom Betätigungselement 601 ausgeübte Kraft auf alle zu einem Block gehörigen Nadeln simultan auszuüben. Die Blockrahmen umfassen jeweils ein Verbindungsgestell, an dem die zu einem Block gehörigen Dosiereinrichtungen befestigt sind. Die Picking-Nadeln sind jeweils mit zwei Federn, nämlich mit einer Rückholfeder 603 für die Blockrahmen 602 (bzw. das Verbindungsgestell) und einer Ausgleichsfeder 604 für die Picking-Nadeln gelagert. Die Ausgleichsfedern 604 besitzen die Funktion, minimale Höhenunterschiede der Picking-Nadeln bei deren Aufsetzen auf ein Substrat auszugleichen. Hierzu sind die Dosiereinrichtungen am Blockrahmen über die Ausgleichsfedern 604 in axialer Richtung verschiebbar gelagert. Die Nadelblöcke können einzeln aus einer Grundposition (1) durch Betätigung des Elements 601 in eine abgesenkte Position (2) überführt werden. Das Betätigungselement 601 kann ein Pneumatikzylinder oder ein Hubmagneten sein. Beim genannten 384-er Raster sind insgesamt 24 Nadelblöcke vorgesehen. Diese Blockbildung kann anwendungsabhängig an die Form des jeweiligen Zieltargets angepaßt sein, wobei sich das 4 · 4-Subraster besonders für die folgenden Dosier- oder Probenmanipulierungsvorgänge eignet. Das Betätigungselement 601 kann auch eine Gruppe von Betätigungsnadeln der oben beschriebenen Nadelmatrix entsprechend der Gruppe der betätigten Dosiereinrichtungen umfassen. Die Blockanordnung 200 kann somit analog zur oben beschriebenen austauschbaren Trägerplatte als ein Wechselmodul einer Dosierstation vorgesehen sein.

Eine Dosierstation gemäß Fig. 6 ist beispielsweise in der Lage, beliebige, in gelöster Form in einer Mikrotiterplatte vorliegende Substanzen auf eine Trägermatrix mit einem bestimmten Format zu übertragen. Es werden beispielsweise die durch eine Polymerasekettenreaktion (PCR) synthetisierten Nukleinsäuren aus den 384 Vertiefungen der Mikrotiterplatte dem Dosierkopf entnommen und in einer möglichst dichten Anordnung auf ein ebenes Target (z.B. Glasträger) übertragen. Typische Spotabstände und Spotdichten sind z.B. 15 x 15 Spots bei 500 µm Abstand (225 Spots/cm², insbesondere für Bakterienkulturen) bzw. 50 x 50 Spots bei 50 µm Abstand (2500 Spots/cm², insbesondere für PCR-Produkte). Durch Hybridisierung mit geeigneten spezifischen Sondensubstanzen, die durch nicht radioaktive Verfahren wie z.B. fluoreszierende Farbstoffe markiert wurden, kann die Expression eines durch ein PCR-Produkt repräsentierten Gens in einem bestimmten Gewebe ermittelt und quantifiziert werden. Die erfindungsgemäße Blockbildung ermöglicht eine hochdichte Anordnung der PCR-Produkte auf dem Glasträger, indem die an der Mikrotiterplatte parallel betätigten Nadelblökke am Glasträger sequentiell Block für Block entladen werden, wobei zwischen je zwei Entladungen auf dem Glasträger jeweils eine Verfahrbewegung des Dosierkopfes um einen bestimmten Abstand (entsprechend dem gewünschten Spotabstand) erfolgt. Diese Verfahrensweise ist mit herkömmlichen, einzeln zu betätigenden 4 · 4-Nadelmatrizen, die darüberhinaus bei jedem Arbeitsschritt auch noch einen gesonderten Waschschritt erfordern, nicht realisierbar.

Die Fign. 7A bis 7D illustrieren weitere Dosierstationen mit teilweise durchbrochen dargestellter Gehäusewand für verschiedene Rasterformate der Dosiereinrichtungen. In den Figuren ist jeweils links die schmale und rechts die breite Seitenansicht der Dosierstationen gezeigt. Gemäß Fig. 7A bilden die Picking-Nadeln 251 ein 8 · 12-Raster entsprechend einer 96er Mikrotiterplatte. Jede Picking-Nadel 251 ist mit einem separaten Pneumatikzylinder (s. oben) ansteuerbar. Analog zu Fig. 6 zeigt Fig. 7B eine Anordnung mit einem 16 · 24-Raster, wobei 24 Blöcke zu je 4 · 4 Picking-Nadeln gebildet sind. Eine Ausführungsform mit 96 Mikropipetten 252, 253 ist in Fig. 7C gezeigt. Dies entspricht einem Raster von 8 · 12 Mikropipetten. Während in Fig. 7C die Pipettenanordnung ohne eine vorgeschobene Mikropipette gezeigt ist, stellt Fig. 7D den Fall mit vorgeschobener Mikropipette (s. auch Fig. 4) dar.

Die Auswertung der Hybridisierungsergebnisse auf den Glasträgern erfolgt dann durch eine computerunterstützte Bildanalyse. Der erfindungsgemäße Dosierkopf ermöglicht eine Anordnung der PCR-Produkte mit einer Dichte, Genauigkeit und Reproduzierbarkeit, die für die Bildanalyse erforderlich ist. Damit läßt sich ein um den Faktor 10 erhöhter Probendurchsatz erzielen.

Der Einsatz des Dosierkopfes gemäß Fig. 6 ist jedoch nicht auf das Ausbringen von Nukleinsäuren auf Trägersubstrate beschränkt. Im Zuge der Miniaturisierung der Test- und Nachweisverfahren liegt eine weitere Anwendung der erfindungsgemäßen Mikroarrays bei der Funktionsanalyse exprimierter Proteine, die im Mikrotiterformat vorliegen.

Gegenstand der Erfindung ist somit auch ein Verfahren zur Erstellung von Proben-Mikroarrays, bei dem die zu testenden Substanzen oder Proben in gelöster Form von einer geordneten Matrix (z.B. Mikrotiterplatte) auf eine Oberfläche übertragen werden, die flächenmäßig die Ausmaße der ursprünglichen Matrixanordnung unterschreitet. Sowohl die Menge der ausgebrachten Substanzen als auch das Volumen der Nachweisreagenzien kann dabei durch die extrem dichte Anordnung der Spots im Vergleich zu herkömmlichen Methoden stark reduziert werden. Im Anschluß an das Übertragungsverfahren kann sich ein Nachweisverfahren anschließen, bei dem ein Meßsignal (z.B. Fluoreszenzmessung) lokal begrenzt detektiert wird.

Der oben beschriebene Dosierkopf kann wie folgt modiziert werden. Es kann vorgesehen sein, daß in Betriebsposition die Dosierung nicht nur nach unten, sondern bei entsprechenden Dosiereinrichtungen in der Horizontalen erfolgt. Anwendungsabhängig kann die Zwei-Phasen-Betätigung von Mikropipetten gemäß Fig. 4 durch weitere Bewegungsphasen ergänzt werden, indem weitere Rückholfedern jeweils mit abgestimmter Federkonstante vorgesehen sind. Der erfindungsgemäße Dosierkopf kann mit Vorteil mit den Elementen einer Picking-/Spotting-Anlage kombiniert werden.

## Patentansprüche

1. Dosierkopf, der mit einer Stelleinrichtung frei verfahrbar ist und eine Vielzahl von Dosiereinrichtungen (251, 252) aufweist, die als einzelne Dosiereinrichtungen oder als Dosiereinrichtungsblöcke einzeln oder blockweise jeweils mit einer Betätigungseinrichtung (220) versehen sind, wobei die Dosiereinrichtungen Picking-Nadeln (251) oder Mikropipetten (252) umfassen, und eine mit dem Dosierkopf verfahrbare Steuereinrichtung mit Steuerausgängen vorgesehen ist, deren Anzahl mindestens gleich der Anzahl der Betätigungseinrichtungen (220) ist, so daß beim Dosierkopfbetrieb die Dosiereinrichtungen oder Dosiereinrichtungsblöcke voneinander unabhängig betätigbar sind,
**dadurch gekennzeichnet, daß**
die Picking-Nadeln (251) oder Mikropipetten (252) entsprechend der Ausrichtung von Probenvolumina einer Mikrotiterplatte angeordnet sind,
die Betätigungseinrichtungen (220) jeweils durch einen Pneumatikzylinder (122) gebildet werden, der eine Stellnadel zur Betätigung der Dosiereinrichtungen oder der Dosiereinrichtungsblöcke aufweist, und
jeder Pneumatikzylinder (122) über eine Druckleitung (121) mit einem zugehörigen Steuerausgang verbunden sind.

2. Dosierkopf gemäß Anspruch 1, bei dem die Dosiereinrichtungen matrixförmig angeordnet sind und die Pneumatikzylinder (122) eine Stellmatrix (210) bilden, die mit den matrixförmig angeordneten Dosiereinrichtungen zusammenwirkt.

3. Dosierkopf gemäß Anspruch 1 oder 2, bei dem die Dosiereinrichtungen oder Dosiereinrichtungsblöcke eine Dosierstation (200) bilden, die als austauschbares Modul am Dosierkopf lösbar angebracht ist.

4. Dosierkopf gemäß Anspruch 3, bei dem die Dosierstation (200) die Stellmatrix (210) und einen Halterungsblock enthält, an dem die Picking-Nadeln (251) oder Mikropipetten (252) derart angebracht sind, daß deren obere Endauflagen (256) im wesentlichen in einer Ebene ausgerichtet sind und die Enden der Stellnadeln der Stellmatrix (210) berühren.

5. Dosierkopf gemäß Anspruch 4, bei dem die Mikropipetten an einer Trägerplatte (240) des Halterungsblocks angebracht sind und jeweils einen Pipettenkolben (255) besitzen, der mit einer Kolbenfeder (257) gegenüber dem Zylinder der Mikropipette vorgespannt ist.

6. Dosierkopf gemäß Anspruch 5, bei dem die Mikropipetten (252) gegenüber der Trägerplatte (240) axial beweglich sind, wobei der Zylinder der Mikropipette gegenüber der Trägerplatte (240) mit einer Zylinderfeder (258) vorgespannt ist.

7. Dosierkopf gemäß Anspruch 6, bei dem die Federkonstante der Zylinderfeder (258) geringer als die Federkonstante der Kolbenfeder (257) ist.

8. Dosierkopf gemäß Anspruch 7, bei dem jede Mikropipette (252) bei Betätigung der zugehörigen Stellnadel zunächst unter Kompression der Zylinderfeder (258) von einer Grundposition in eine Pipettierposition verfahrbar und anschließend unter Kompression der Kolbenfeder (257) zur Auslösung des Pipettierausgangs betätigbar ist.

9. Dosierkopf gemäß einem der vorhergehenden Ansprüche, bei dem 96 oder 384 Dosiereinrichtungen vorgesehen sind.

10. Dosierkopf gemäß einem der vorhergehenden Ansprüche 2 bis 9, bei dem zwischen der Stellmatrix (210) und den Dosiereinrichtungen (251, 252) ein Plattenelement (502) vorgesehen ist, das die Endauflagen (256) von blockweise angeordneten Dosiereinrichtungen (251, 252) miteinander verbindet.

11. Dosierkopf gemäß einem der Ansprüche 1 bis 9, bei dem Plattenelemente (502) oder Blockrahmen (602) vorgesehen sind, mit denen die Dosiereinrichtungen blockweise verbunden sind.

12. Dosierkopf gemäß Anspruch 11, bei der die Stellmatrix Stellnadeln umfasst, deren Anzahl der Anzahl von Plattenelementen bzw. Blockrahmen entspricht.

13. Dosierkopf gemäß einem der vorhergehenden Ansprüche, bei dem eine Deckelstation (130) und/oder eine Greiferstation (140) vorgesehen ist.

14. Dosierkopf gemäß einem der vorhergehenden Ansprüche, bei dem die Mikropipetten (252) einen Zylinder (254), eine Pipettenspitze (253), einen Pipettenkolben (255), eine Kolbenfeder (257), mit der der Pipettenkolben (255) gegenüber dem Zylinder (254) vorgespannt ist, und eine Zylinderfeder (258), mit der der Zylinder (254) gegenüber einem Träger (240) vorgespannt ist, aufweisen, der eine Führung für eine axiale Bewegung der Mikropipette gegen die Spannung der Zylinderfeder (258) bildet.

15. Dosierkopf gemäß Anspruch 14, bei dem die Zylinderfeder (258) eine geringere Federkonstante als die Kolbenfeder (257) besitzt.

16. Picking-/Spotting-Anlage, die mit einem Dosierkopf gemäß einem der Ansprüche 1 bis 15 ausgerüstet ist.

17. Verfahren zur Probenaufnahme oder -abgabe einer Vielzahl von flüssigen Proben unter Verwendung eines Dosierkopfs gemäß einem der Ansprüche 1 bis 16, bei dem Dosiereinrichtungen einzeln oder simultan betätigt werden, um Proben von einem Trägersubstrat aufzunehmen oder auf diesem abzulegen.

18. Verfahren gemäß Anspruch 17, bei dem eine Probenmanipulierung in Substanzbibliotheken für molekulargenetische, biochemische oder medizinische Zwecke erfolgt.

19. Verfahren gemäß Anspruch 17 oder 18, bei dem Proben mit allen Dosiereinrichtungen von einem Trägersubstrat simultan aufgenommen und blockweise auf einem Targetsubstrat sequentiell abgelegt werden, wobei der Dosierkopf nach jeder Probenablage mit je einem Block der Dosiereinrichtungen um einen vorbestimmten Weg verfahren wird.

## Claims

1. Dosing head, which is freely moveable with a positioning device and has a plurality of dosing means (251, 252), which as individual dosing means or as blocks of dosing means are respectively provided, individually or in blocks, with an operating device (220), wherein the dosing means comprise picking needles (251) or micropipettes (252), and a control device is provided, which may be moved with the dosing head and has control outlets, the number of which is at least equal to the number of operating devices (220), so that during operation of the dosing head the dosing means or blocks of dosing means may be operated independently of one another,
**characterised in that**
the picking needles (251) or micropipettes (252) are arranged in accordance with the orientation of sample volumes of a microtiter plate
the operating devices (220) are respectively formed by a pneumatic cylinder (122), which has a control needle for operating the dosing means or the blocks of dosing means, and
each pneumatic cylinder (122) is connected to an associated control outlet via a pressure line (121).

2. Dosing head according to Claim 1, wherein the dosing means are arranged in matrix form and the pneumatic cylinders (122) form a positioning matrix (210), which interacts with the dosing means arranged in matrix form.

3. Dosing head according to Claim 1 or 2, wherein the dosing means or blocks of dosing means form a dosing station (200), which is detachably positioned on the dosing head as a replaceable module.

4. Dosing head according to Claim 3, wherein the dosing station (200) contains the positioning matrix (210) and a mounting block, to which the picking needles (251) or micropipettes (252) are attached such that their upper end supports (256) are essentially oriented in one plane and touch the ends of the control needles of the positioning matrix (210).

5. Dosing head according to Claim 4, wherein the micropipettes are attached to a support plate (240) of the mounting block and respectively have a pipette plunger (255), which is prestressed with a plunger spring (257) in relation to the cylinder of the micropipette.

6. Dosing head according to Claim 5, wherein the micropipettes (252) are axially moveable in relation to the support plate (240), the cylinder of the micropipette being prestressed with a cylinder spring (258) in relation to the support plate (240).

7. Dosing head according to Claim 6, wherein the spring constant of the cylinder spring (258) is lower than the spring constant of the plunger spring (257).

8. Dosing head according to Claim 7, wherein upon operation of the associated control needle each micropipette (252) may be moved, firstly under compression of the cylinder spring (258), from a base position into a pipetting position and then, under compression of the plunger spring (257), may be operated to trigger the pipetting outlet.

9. Dosing head according to one of the preceding claims, wherein 96 or 384 dosing means are provided.

10. Dosing head according to one of the preceding claims 2 to 9, wherein a plate element (502) connecting the end supports (256) of the dosing means (251, 252) arranged in blocks to one another is provided between the positioning matrix (210) and the dosing means (251, 252).

11. Dosing head according to one of Claims 1 to 9, wherein plate elements (502) or block frames (602) are provided, with which the dosing means are connected in blocks.

12. Dosing head according to Claim 11, wherein the positioning matrix comprises control needles, the number of which corresponds to the number of plate elements or block frames.

13. Dosing head according to one of the preceding claims, wherein a cover station (130) and/or a gripper station (140) is provided.

14. Dosing head according to one of the preceding claims, wherein the micropipettes (252) have a cylinder (254), a pipette tip (253), a pipette plunger (255), a plunger spring (257), with which the pipette plunger (255) is prestressed in relation to the cylinder (254), and a cylinder spring (258), with which the cylinder (254) is prestressed in relation to a support (240), which forms a guide for an axial movement of the micropipette against the tension of the cylinder spring (258).

15. Dosing head according to Claim 14, wherein the cylinder spring (258) has a lower spring constant than the plunger spring (257).

16. Picking/spotting apparatus, which is equipped with a dosing head according to one of Claims 1 to 15.

17. Method of taking up or delivering a plurality of liquid samples using a dosing head according to one of Claims 1 to 16, wherein dosing means are operated individually or simultaneously to take up samples from a support substrate or to deposit these on this.

18. Method according to Claim 17, wherein sample manipulation is conducted in substance libraries for molecular-genetic, biochemical or medical purposes.

19. Method according to Claim 17 or 18, wherein samples are taken up simultaneously with all dosing means from a support substrate and are deposited sequentially in blocks on a destination substrate, the dosing head being moved around a predetermined path after each sample deposit with one respective block of the dosing means.

## Revendications

1. Tête de dosage pouvant se déplacer librement avec un dispositif de positionnement et présentant une multitude de dispositifs de dosages (251, 252) lesquels sont respectivement pourvus, en tant que dispositifs de dosage individuels ou en tant que blocs de dispositifs de dosage, individuellement ou bloc par bloc, d'un dispositif d'actionnement (220), où les dispositifs de dosage comprennent des aiguilles de triage (251) ou des micro-pipettes (252), et où un dispositif de commande déplaçable avec la tête de dosage avec des sorties de commande est prévu, dont le nombre est au moins égal au nombre des dispositifs d'actionnement (220), de sorte que lors du fonctionnement de la tête de dosage, les dispositifs de dosage ou les blocs de dispositifs de dosage peuvent être actionnés indépendamment les uns des autres, **caractérisée en ce que** les aiguilles de triage (251) ou micro-pipettes (252) sont disposées en fonction de l'orientation des volumes de prélèvement d'une plaque de microtitration, **en ce que** les dispositifs d'actionnement (220) sont respectivement formés par un cylindre pneumatique (122) présentant une aiguille de commande pour l'actionnement des dispositifs de dosage ou des blocs de dispositifs de dosage, et **en ce que** chaque cylindre pneumatique (122) est relié via une conduite forcée (121) à une sortie de commande associée.

2. Tête de dosage selon la revendication 1, pour laquelle les dispositifs de dosage sont disposés en forme de matrice et où les cylindres pneumatiques (122) forment une matrice de réglage (210) qui agit conjointement avec les dispositifs de dosage disposés en forme de matrice.

3. Tête de dosage selon la revendication 1 ou 2, pour laquelle les dispositifs de dosage ou les blocs de dispositifs de dosage forment une station de dosage (200), laquelle est montée de façon détachable en tant que module échangeable sur la tête de dosage.

4. Tête de dosage selon la revendication 3, pour laquelle la station de dosage (200) comprend la matrice de réglage (210) et un bloc de maintien sur lequel les aiguilles de triage (251) ou les micro-pipettes (252) sont fixées de manière à ce que leurs appuis supérieurs d'extrémité (256) sont essentiellement orientés sur un même plan et touchent les extrémités des aiguilles de commande de la matrice de réglage (210).

5. Tête de réglage selon la revendication 4, pour laquelle les micro-pipettes sont fixées sur une plaque de support (240) du bloc de maintien et possèdent respectivement un piston de pipette (255), lequel est précontraint avec un ressort de piston (257) par rapport au cylindre de la micro-pipette.

6. Tête de dosage selon la revendication 5, pour laquelle les micro-pipettes (252) peuvent se déplacer axialement par rapport à la plaque de support (240), moyennant quoi le cylindre de la micro-pipette est précontraint par rapport à la plaque de support (240) à l'aide d'un ressort de cylindre (258).

7. Tête de dosage selon la revendication 6, pour laquelle la constante de rappel du ressort de cylindre (258) est inférieure à la constante de rappel du ressort de piston (257).

8. Tête de dosage selon la revendication 7, pour laquelle chaque micro-pipette (252), lors de l'actionnement de l'aiguille de commande associée, peut d'abord se déplacer sous l'effet de la compression du ressort de cylindre (258) d'une position de base vers une position de pipetage, et peut ensuite être actionnée sous l'effet de la compression du ressort de piston (257) pour le déclenchement de la sortie de pipetage.

9. Tête de dosage selon l'une quelconque des revendications précédentes, pour laquelle sont prévus 96 ou 384 dispositifs de dosage.

10. Tête de dosage selon l'une quelconque des revendications précédentes 2 à 9, pour laquelle un élément de plaque (502) est prévu entre la matrice de réglage (210) et les dispositifs de dosage (251, 252) qui relie entre eux les appuis d'extrémité (256) de dispositifs de dosage (251, 252) disposés bloc par bloc.

11. Tête de dosage selon l'une quelconque des revendications 1 à 9, pour laquelle des éléments de plaque (502) ou cadres de plaques (602) sont prévus, avec lesquels les dispositifs de dosage sont reliés bloc par bloc.

12. Tête de dosage selon la revendication 11, pour laquelle la matrice de réglage englobe des aiguilles de commande dont le nombre correspond au nombre d'éléments de plaque et/ou de cadres de bloc.

13. Tête de dosage selon l'une quelconque des revendications précédentes, pour laquelle une station de couvercle (130) et/ou une station de pince (140) est prévue.

14. Tête de dosage selon l'une quelconque des revendications précédentes, pour laquelle les micro-pipettes (252) présentent un cylindre (254), une pointe de pipette (253), un piston de pipette (255), un ressort de piston (257), avec lequel le piston de pipette (255) est précontraint par rapport au cylindre (254), et un ressort de cylindre (258), avec lequel le cylindre est précontraint par rapport à un support (240), qui forme un guidage pour un déplacement axial des micro-pipettes contre la tension du ressort de cylindre (258).

15. Tête de dosage selon la revendication 14, pour laquelle le ressort de cylindre (258) possède une constante de rappel inférieure à celle du ressort de piston (257).

16. Installation de picking/spotting, laquelle est équipée avec une tête de dosage selon l'une quelconque des revendications 1 à 15.

17. Procédé pour le prélèvement ou la délivrance d'échantillons d'une multitude d'échantillons liquides en utilisant une tête de dosage selon l'une quelconque des revendications 1 à 16, pour lequel des dispositifs de dosage sont actionnés individuellement ou simultanément afin de prélever des échantillons d'un substrat porteur ou les déposer sur celui-ci.

18. Procédé selon la revendication 17, pour lequel une manipulation d'échantillons s'effectue dans des bibliothèques de substances pour des besoins de génétique moléculaire, des besoins biochimiques ou médicaux.

19. Procédé selon la revendication 17 ou 18, pour lequel les échantillons sont prélevés simultanément avec tous les dispositifs de dosage d'un substrat porteur, et sont déposés bloc par bloc de manière séquentielle sur un substrat cible, moyennant quoi la tête de dosage, après chaque dépôt d'échantillon, est déplacée avec respectivement un bloc des dispositifs de dosage selon un parcours prédéfini.
